# EUROPÄISCHE PATENTSCHRIFT

(11) **EP 0 854 079 B1**
(45) Veröffentlichungstag und Bekanntmachung des Hinweises auf die Patenterteilung: **26.03.2003**
(21) Anmeldenummer: 97121311.1
(22) Anmeldetag: 04.12.1997
(51) Int. Cl.: B62K 25/04, F16F 9/46

(54) **Federbein zur Federung des Vorderrades eines Motorrades**
Suspension strut for motorcycle front wheel suspension
Jambe de suspension pour la suspension de roue avant pour motocyclette

(30) Priorität: 16.01.1997 DE 19701272
(43) Veröffentlichungstag der Anmeldung: 22.07.1998
(73) Patentinhaber: Bayerische Motoren Werke Aktiengesellschaft, 80788 München (DE)
(72) Erfinder: Jahreiss, Hans-Jürgen, 82178 Puchheim (DE)

(56) Entgegenhaltungen:
- EP-A- 0 542 282
- CH-A- 317 338
- DE-A- 4 429 562
- US-A- 5 078 241

## Beschreibung

Die Erfindung betrifft ein Federbein zur Federung des Vorderrades eines mit einer Kugelgelenkgabel ausgerüsteten Motorrades, umfassend ein Dämpfergehäuse, das einen hydraulischen Dämpfermechanismus enthält und einen unteren Federteller sowie ein Federbeinauge zur gelenkigen Verbindung mit einem Längslenker aufweist, eine in dem Dämpfergehäuse geführte und mit dem Dämpfermechanismus verbundene Kolbenstange, die einen oberen Federteller zur gelenkigen Abstützung an einem Vorderrahmen aufweist, und eine an dem oberen und an dem unteren Federteller anliegende Schraubenfeder, wobei die Kolbenstange über den oberen Federteller hinaus nach oben verlängert ist.

Bei einem in der CH-A-317338 beschriebenen Federbein dieser Gattung ist die Dämpfungscharakteristik fest vorgegeben.

Aus der EP-A-0 542 282 ist auch bereits ein Federbein zu Federung eines Motorrades bekannt, das mit einer Verstelleinrichtung versehen ist, die eine Änderung der Dämpfungscharakteristik ermöglicht. Bei diesem bekannten Federbein ist die Kolbenstange hohl ausgebildet, und sie weist im unteren Bereich einen den Dämpfermechanismus umgehenden Strömungskanal auf. Eine Ventilnadel ist in der Kolbenstange angeordnet und über ein Gewinde mit dieser axial beweglich verbunden. Die Ventilnadel weist am unteren Ende einen Ventilkörper zum Verändern des freien Querschnitts des Strömungskanals auf. Das obere Ende der Ventilnadel kann erfaßt und verdreht werden, um die Dämpfungscharakteristik zu verändern. Dies dürfte aber nur bei aufgebocktem, stillstehendem Fahrzeug unter Verwendung eines besonderen Werkzeugs möglich sein. In der Beschreibung ist zwar ausgeführt, daß die Ventilnadel mittels ÜberEragungselementen vom Armaturenbrett eines Kraftfahrzeugs aus verstellbar sein soll. Wie diese Übertragungselemente ausgebildet sein sollen, ist jedoch nicht offenbart.

Der Erfindung liegt die Aufgabe zugrunde, das Federbein der eingangs genannten Art dahingehend weiterzubilden, daß die Dämpfungscharakteristik vom Fahrer des Motorrades verändert werden kann, ohne absteigen zu müssen.

Erfindungsgemäß wird diese Aufgabe dadurch gelöst, daß die Kolbenstange hohl ausgebildet ist, und daß sich ihr oberes Ende im Sicht- und Griffbereich des Fahrers befindet, daß die Kolbenstange im unteren Bereich einen den Dämpfermechanismus umgehenden Strömungskanal aufweist, daß in der Kolbenstange eine Ventilnadel axial beweglich angeordnet ist, daß die Ventilnadel am unteren Ende einen Ventilkörper zum Verändern des freien Querschnitts des Strömungskanals aufweist, daß am oberen Ende der Kolbenstange ein Ansatzstück befestigt ist, das mit einem Innenfeingewinde und mit einer eine Druckfeder und eine Kugel aufnehmenden Radialbohrung versehen ist, und daß am oberen Ende der Ventilnadel ein Einstell-Handrad zum Verändern der Axialstellung der Ventilnadel (22) befestigt ist, das eine mit einem Außenfeingewinde versehene Nabe und ein das Ansatzstück übergreifendes Hemd umfaßt, dessen Innenfläche mit Rastnuten versehen ist.

Bei einem derartig ausgebildeten Federbein kann der Fahrer des Motorrades die Dämpfungscharakteristik ohne Verwendung eines besonderen Werkzeugs im Bedarfsfall verändern, ohne absteigen zu müssen.

Ein Ausführungsbeispiel der Erfindung ist in der Zeichnung dargestellt und wird nachfolgend näher erläutert. Es zeigt:
Fig. 1 eine schematische Darstellung eines mit einer Kugelgelenkgabel ausgerüsteten Motorrades,
Fig. 2 eine teilweise geschnittenen Seitenansicht eines vorderen Federbeins, und
Fig. 3 und 4 Ausschnitte aus Fig. 2 in größerem Maßstab.

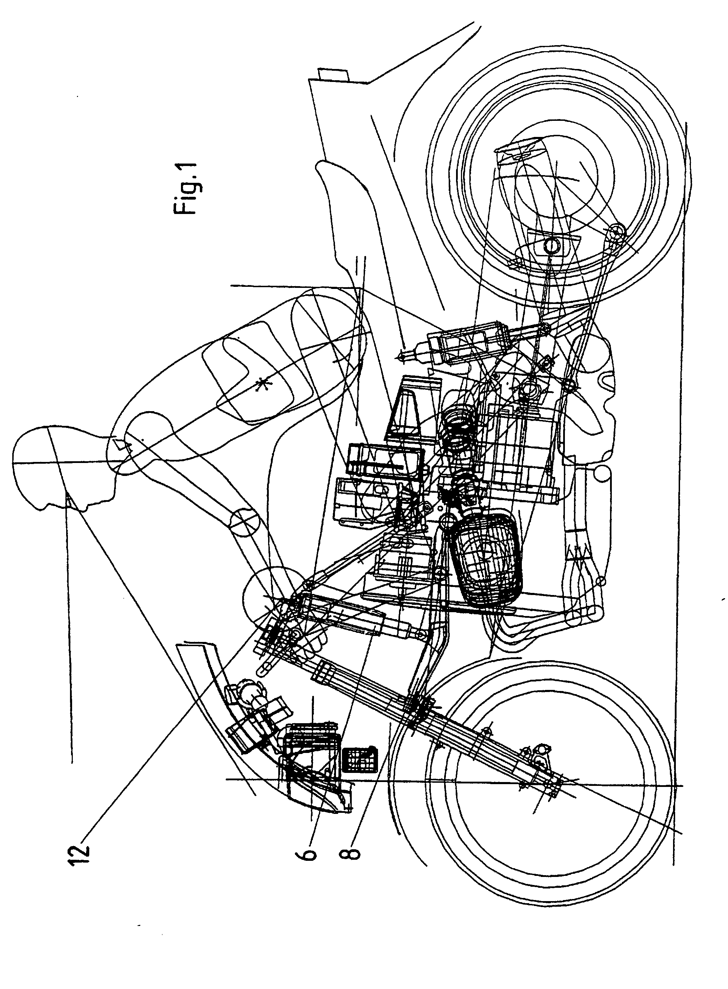

Das in Fig. 1 schematisch dargestellte Motorrad ist mit einer sogenannten Kugelgelenkgabel ausgerüstet. Dabei handelt es sich um eine Teleskopgabel, die am oberen Ende mit dem Vorderrahmen des Motorrades dreh- und schwenkbar verbunden und durch einen Längslenker 8 geführt ist. Der Längslenker 8 ist mit einem Federbein 6 gegenüber dem Vorderrahmen abgestützt. Da eine derartige Ausbildung und Führung einer Kugelgelenkgabel zum Stand der Technik gehört, ist eine nähere Erläuterung entbehrlich.

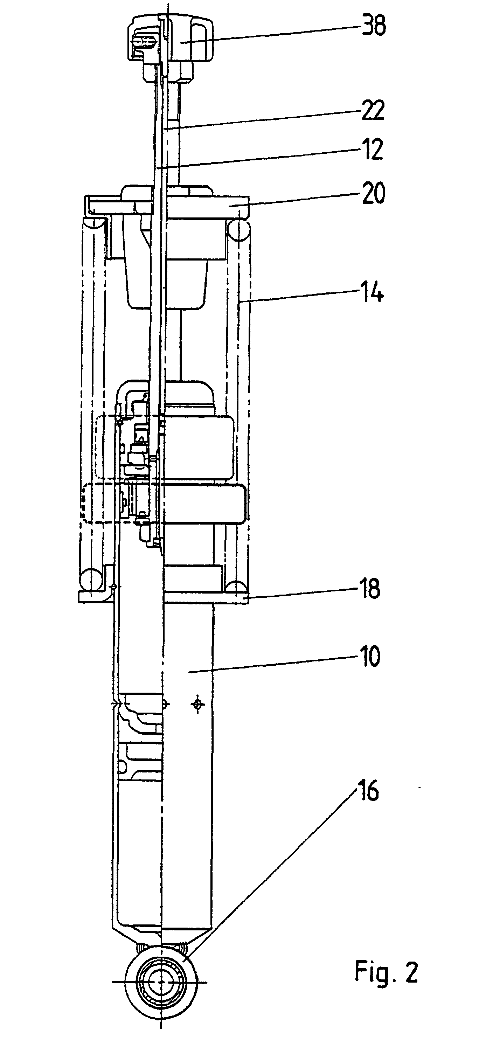

Fig. 2 zeigt eine teilweise geschnittene Seitenansicht des zur Federung des Vorderrades dienenden Federbeins. Dieses Federbein besteht in an sich bekannter Weise grundsätzlich aus drei Teilen, nämlich einem Dämpfergehäuse 10, einer Kolbenstange 12 und einer Schraubenfeder 14. Die Kolbenstange 12 ist in dem Dämpfergehäuse 10 zu einer Axialbewegung geführt und mit einem in dem Dämpfergehäuse angeordneten hydraulischen Dämpfermechanismus verbunden. Das Dämpfergehäuse 10 ist mit einem Federbeinauge 16 zur gelenkigen Verbindung mit dem in Fig. 1 gezeigten Längslenker 8 und mit einem unteren Federteller 18 versehen. Die Kolbenstange 12 ist mit einem oberen Federteller 20 zur gelenkigen Abstützung am Vorderrahmen des Motorrades versehen. Die Schraubenfeder 14 stützt sich am unteren und am oberen Federteller 18, 20 ab und hält die Kolbenstange 12 gegenüber dem Dämpfergehäuse 10 in einem ausgefahrenen Zustand.

Wenn auf das Vorderrad des Motorrades und damit über die Teleskopgabel und den Längslenker 8 auf das Federbeinauge 16 eine vertikale Kraft ausgeübt wird, dann wird das Dämpfergehäuse 10 unter Kompression der Schraubenfeder 14 gegenüber der Kolbenstange 12 nach oben bewegt. Dieser Vorgang wird als Einfedern bezeichnet. Wenn die auf das Federbeinauge 16 ausgeübte Axialkraft aufgehoben wird, dann kann sich die Schraubenfeder 14 entspannen, und das Dämpfergehäuse 10 bewegt sich gegenüber der feststehenden Kolbenstange 12 nach unten. Dieser Vorgang wird als Ausfedem bezeichnet. Die Relativbewegung beim Ein- und Ausfedern wird durch den im Dämpfergehäuse 10 angeordneten und mit der Kolbenstange 12 verbundenen Dämpfermechanismus gedämpft. Ein solcher Dämpfermechanismus besteht grundsätzlich aus einem mit der Kolbenstange 12 verbundenen Kolben, der mit Überströmkanälen versehen ist, die ein gebremstes Überströmen der Hydraulikflüssigkeit von der sich verkleinernden Kammer in die sich vergrößernde Kammer des Dämpfergehäuses 10 beiderseits des Kolbens ermöglichen.

Die vorstehende Konstruktion und Wirkungsweise des Federbeins ist dem Fachmann geläufig und bedarf keiner weiteren Erläuterung.

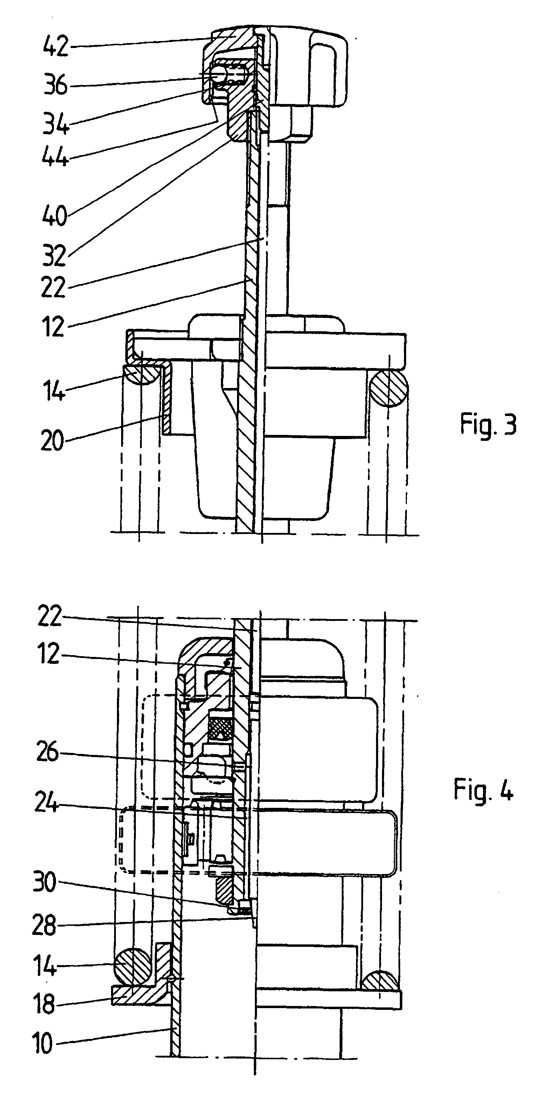

Wie dies deutlicher aus den Fig. 3 und 4 hervorgeht, ist die Kolbenstange 12 mit einer Axialbohrung versehen, in der eine Ventilnadel 22 verschiebbar geführt ist. Im unteren Endbereich der Kolbenstange 12 ist die Bohrung erweitert, um einen die Ventilnadel 22 umgebenden Strömungskanal 24 zu bilden. Dieser Strömungskanal 24 steht mit der oberen Kammer des Dämpfergehäuses 10 über eine radiale Bohrung 26 der Kolbenstange 12 in Verbindung. Der Strömungskanal 24 umgeht somit den Dämpfermechanismus. Am unteren Ende der Ventilnadel 22 ist ein Ventilkegel 28 befestigt, der mit einem in eine endseitige Ausnehmung der Kolbenstange 12 eingesetzten Ring 30 zusammenwirkt. Am oberen Ende der Kolbenstange 12 ist ein mit einem Innenfeingewinde versehenes Ansatzstück 32 befestigt. Das Ansatzstück 32 ist ferner mit einer Radialbohrung versehen, in die eine Druckfeder 34 und eine Kugel 36 eingesetzt sind. Am oberen Ende der Ventilnadel 22 ist die Nabe 40 eines Handrades 38 befestigt. Diese Nabe 40 ist mit einem Außenfeingewinde versehen und in das Ansatzstück 32 der Kolbenstange 12 eingeschraubt. Das Handrad 38 weist ein das Ansatzstück 32 übergreifendes Hemd 42 auf, dessen Innenfläche mit axialen Rastnuten 44 versehen ist.

Durch Verdrehen des Handrades 38 können die Dämpfungseigenschaften des Federbeins verändert werden. Je nachdem, in welcher Richtung das Handrad 38 verdreht wird, wird die Ventilnadel 22 gegenüber der Kolbenstange 12 in der einen oder in der anderen Richtung axial verstellt, so daß der zwischen dem Ventilkegel 28 und dem Ring 30 begrenzte freie Querschnitt des Strömungskanals 24 vergrößert oder verkleinert wird. Je größer dieser freie Querschnitt ist, desto mehr Hydraulikflüssigkeit kann unter Umgehung des Dämpfungsmechanismus zwischen den beiden Kammern des Dämpfergehäuses 10 überströmen, mit der Folge, daß die Dämpfungswirkung abnimmt.

Wie aus Fig. 1 hervorgeht, erstreckt sich das obere Ende der Kolbenstange 12 hinter dem Lenkkopf durch eine entsprechende Aussparung des Kraftstoffbehälters nach oben, so daß es sich im Sicht- und Griffbereich des auf dem Motorrad sitzenden Fahrers befindet. Der Fahrer kann daher ohne abzusteigen die Dämpfungseigenschaften des Federbeins durch Verdrehen des Handrades 38 auf einfache Weise verstellen.

### Bezugszeichenliste

- 10: Dämpfergehäuse
- 12: Kolbenstange
- 14: Schraubenfeder
- 16: Federbeinauge
- 18: unterer Federteller
- 20: oberer Federteller
- 22: Ventilnadel
- 24: Strömungskanal
- 26: radiale Bohrung
- 28: Ventilkegel
- 30: Ring
- 32: Ansatzstück
- 34: Druckfeder
- 36: Kugel
- 38: Handrad
- 40: Nabe
- 42: Hemd
- 44: Rastnuten

## Patentansprüche

1. Federbein zur Federung des Vorderrades eines mit einer Kugelgelenkgabel ausgerüsteten Motorrades, umfassend ein Dämpfergehäuse (10), das einen hydraulischen Dämpfermechanismus enthält und einen unteren Federteller (18) sowie ein Federbeinauge (16) zur gelenkigen Verbindung mit einem Längslenker (8) aufweist, eine in dem Dämpfergehäuse geführte und mit dem Dämpfermechanismus verbundene Kolbenstange (12), die einen oberen Federteller (20) zur gelenkigen Abstützung an einem Vorderrahmen aufweist, und eine an dem oberen und an dem unteren Federteller anliegende Schraubenfeder (14), wobei die Kolbenstange (12) über den oberen Federteller (20) hinaus nach oben verlängert ist, **dadurch gekennzeichnet, daß** die Kolbenstange (12) hohl ausgebildet ist und daß sich ihr oberes Ende im Sicht- und Griffbereich des Fahrers befindet, daß die Kolbenstange (12) im unteren Bereich einen den Dämpfermechanismus umgehenden Strömungskanal (24) aufweist, daß in der Kolbenstange (12) eine Ventilnadel (22) axial beweglich angeordnet ist, daß die Ventilnadel (22) am unteren Ende einen Ventilkörper (28) zum Verändern des freien Querschnitts des Strömungskanals (24) aufweist, daß am oberen Ende der Kolbenstange (12) ein Ansatzstück (32) befestigt ist, das mit einem Innenfeingewinde und mit einer eine Druckfeder (34) und eine Kugel (36) aufnehmenden Radialbohrung versehen ist, und daß am oberen Ende der Ventilnadel (22) ein Einstell-Handrad (38) zum Verändern der Axialstellung der Ventilnadel (22) befestigt ist, das eine mit einem Außenfeingewinde versehene Nabe (40) und ein das Ansatzstück (32) übergreifendes Hemd (42) umfaßt, dessen Innenfläche mit Rastnuten (44) versehen ist.

## Claims

1. A spring leg for spring suspension of the front wheel of a motorcycle equipped with a ball joint fork, the spring leg comprising a shock-absorber casing (10) containing a hydraulic shock-absorbing mechanism and a spring plate (18) at the bottom and a spring leg eyelet (16) for pivotable connection to a longitudinal control arm (8), the spring leg also comprising a piston rod (12) guided in the shock-absorber casing and connected to the shock-absorbing mechanism and comprising a top spring plate (20) for pivotably bracing against a front frame and a helical spring (14) abutting the top and the bottom spring plate, wherein the piston rod (12) is prolonged upwards beyond the top spring plate (20), **characterised in that** the piston rod (12) is hollow and its top end is within sight and reach of the driver, the piston rod (12) in its bottom region has a flow duct (24) bypassing the shock-absorbing mechanism, a needle valve (22) is axially movable in the piston rod (12), the needle valve (22) at its bottom end has a valve member (28) for altering the free cross-section of the flow duct (24), an attachment member (32) is fastened to the top end of the piston rod (12) and has a fine internal thread and a radial bore holding a pressure spring (34) and a ball (36), and an adjusting hand wheel (38) for altering the axial position of the needle valve (22) is disposed at the top end of the needle valve (22) and comprises a hub (40) formed with a fine external thread and also comprises a skirt (42) extending over the attachment member (32) and formed with adjusting grooves (44) on its inner surface.

## Revendications

1. Jambe de suspension de la roue avant d'une motocyclette équipée d'une fourche à articulation à rotule, comprenant un boîtier d'amortisseur (10) qui contient un mécanisme hydraulique d'amortisseur et présente une cuvette de ressort (18) inférieure ainsi qu'un oeil de jambe de suspension (16) pour la liaison articulée avec une bielle longitudinale (8), une tige de piston (12) guidée dans le boîtier d'amortisseur et présentant une cuvette supérieure de ressort (20) pour appui articulé sur un cadre avant, et un ressort hélicoïdal (14) en appui sur les cuvettes supérieure et inférieure de ressort, la tige de piston (12) étant prolongée vers le haut au-dessus de la cuvette supérieure de ressort (20),
**caractérisée en ce que**
- la tige de piston (12) est creuse, son extrémité supérieure se trouve dans le champ visuel et à portée de la main du conducteur et dans sa partie inférieure, elle présente un canal d'écoulement (24) entourant le mécanisme d'amortisseur,
- dans la tige de piston (12) peut coulisser axialement une aiguille de soupape (22) qui présente à son extrémité inférieure un corps de soupape (28) pour faire varier la section du canal d'écoulement (24),
- à l'extrémité supérieure de la tige de piston (12) est fixé un embout (32) équipé d'un filetage interne fin et percé d'un alésage radial dans lequel sont logés un ressort de poussée (34) et une bille (36), et
- à l'extrémité supérieure de l'aiguille de soupape (22) est fixée une manette de réglage (38) pour faire varier la position axiale de l'aiguille (22), cette manette comprenant un moyeu (40) équipé d'un filetage externe fin et, une chemise (42) en prise par dessus avec l'embout (32) et dont la surface interne est équipée de rainures d'accrochage (44).
